# EUROPÄISCHE PATENTSCHRIFT

(11) **EP 2 545 106 B1**
(45) Veröffentlichungstag und Bekanntmachung des Hinweises auf die Patenterteilung: **13.01.2016**
(21) Anmeldenummer: 11706282.8
(22) Anmeldetag: 04.03.2011
(51) Int. Cl.: C08J 9/00, C08G 18/00, C08L 75/00

(54) **STRAHLENHÄRTBARE SCHLAGSCHÄUME**
RADIATION-CURABLE FOAMS
MOUSSES FORMÉES PAR BATTAGE ET DURCISSABLES PAR RAYONNEMENT

(30) Priorität: 09.03.2010 DE 102010010621
(43) Veröffentlichungstag der Anmeldung: 16.01.2013
(73) Patentinhaber: Covestro Deutschland AG, 51373 Leverkusen (DE)
(72) Erfinder: SOMMER, Stefan, 51375 Leverkusen (DE); WEIKARD, Jan, 51375 Leverkusen (DE); CASSELMANN, Holger, 51519 Odenthal (DE); MICHAELIS, Thomas, 51375 Leverkusen (DE); LUEHMANN, Erhard, 29699 Bomlitz (DE)
(74) Vertreter: Levpat
(86) Internationale Anmeldenummer: PCT/EP2011/053288
(87) Internationale Veröffentlichungsnummer: WO 2011/110487

(56) Entgegenhaltungen:
- EP-A1- 1 717 257
- WO-A1-01/21693
- WO-A1-2008/101661
- WO-A2-2004/035668
- DE-A1- 19 809 540
- GB-A- 2 414 021
- DATABASE WPI Week 201111 Thomson Scientific, London, GB; AN 2011-B10893 XP002645974, & WO 2011/010719 A1 (UBE IND LTD) 27. Januar 2011 (2011-01-27)

## Beschreibung

Die vorliegende Erfindung beschreibt strahlenhärtbare, wässrige Zusammensetzungen zur Herstellung von strahlenhärtbaren Schlagschäumen, ein Verfahren zur Herstellung von strahlengehärteten Schäumen und die Verwendung dieser Schäume in Textilien.

Wässrige Polyurethandispersionen werden aufgrund ihrer exzellenten Verschäumbarkeit, ihrer guten Abriebfestigkeit, Kratz-, Knick- und Hydrolysebeständigkeit für Anwendungen im Bereich Polstermöbel, Arbeitsschutz und Autoinnenausstattung verwendet. Seit Einführung des Umkehrverfahrens, auch Transferverfahren genannt, ist beispielsweise die Herstellung von Artikeln mit lederähnlichem Aussehen möglich (U. Meier-Westhues, Polyurethane, Vincentz Verlag, Hannover, 2007, S. 199-207).

Beim Umkehrverfahren zur Kunstlederherstellung wird ein Deckstrich zunächst auf ein Trennpapier (Silicon- oder Polypropylen-beschichtetes Papier) aufgebracht und thermische getrocknet, da es sich beim Deckstrich in der Regel um Melamin- oder Polyisocyanat-vernetzte Lacke auf Basis von Polyurethandispersionen handelt (2K-System). Es folgt eine Schicht Schlagschaum, bei der es sich um eine mit Luft aufgeschlagene Polyurethandispersion handelt, und die ebenfalls thermisch oberhalb von 140 °C getrocknet wird. Im Anschluss wird die getrocknete Schaumschicht mit einem Kaschierkleber (Haftstrich) versehen und auf ein Textil, z. B. Elastan® transferiert. Um z.B. eine für Leder typische Narbenoptik zu erzeugen, ist das Trennpapier entsprechend genarbt. Beim Umkehrverfahren umfließen die Deckschicht und die Schlagschaumschicht das Narbenmuster auf dem Trennpapier und härten dann in dieser Form mit entsprechendem Narbenmuster aus. Diese Methode zur Abbildung des Musters mit Narbenoptik ist erforderlich, da der einmal gehärtete Schlagschaum aufgrund seiner hohen Rückstellkraft nachträglich nicht mehr mechanisch prägbar ist.

Beim Direktstreichverfahren (U. Meier-Westhues, Polyurethane, Vincentz Verlag, Hannover, 2007, S. 199-207) wird die mit Luft aufgeschlagene Polyurethandispersion direkt auf das Textil aufgebracht und oberhalb von 140 °C thermisch getrocknet. Es folgt der Deckstrich mit thermischer Trocknung. Wenngleich das Direktstreichverfahren im Vergleich zu dem Umkehrverfahren auf den Klebestrich und damit auf einen Arbeitsschritt verzichtet, ist es zur Herstellung von Kunstleder weniger geeignet, da das nachträgliche Prägen einer Narbenoptik aufgrund der hohen Rückstellkraft des Schlagschaums nicht möglich ist. Zudem ist die Verwendung temperaturempfindlicher Textilien, wie z. B. Elastan®, nicht möglich, da die Trocknung des Schlagichaums auf dem Textil stattfindet.

Beide Verfahren erfüllen nicht zufriedenstellend alle Anforderungen, die zur Herstellung von Schäumen für den Textilbereich erforderlich sind, insbesondere wenn es sich um Textilien wie beispielsweise Kunstleder handelt. Das dreistufige Umkehrverfahren zur Herstellung von beispielsweise Kunstleder ist durch die vielen Arbeitsschritte arbeitsaufwendig und durch die thermischen Trocknungsschritte energieintensiv. Das Direktstrcichverfahren erfordert hohe Temperaturen für die Härtung und ist daher ungeeignet zur Verarbeitung von temperaturempfindlichen Textilien wie beispielsweise Elastan^{®}. Außerdem lässt sich eine mechanische Prägung des Schaums im Direktstreichverfahren nicht realisieren, da die gehärteten Schäume eine hohe Rückstellkraft besitzen, die nachteilig für die mechanische Prägung ist. In beiden Verfahren wird ein Melamin- oder Polyisocyanat-vernetzter Deckstrich angewendet, um dem Schlagschaum gute Beständigkeiten gegenüber Chemikalien zu verleihen. Weiterhin beitzen 2-komponentige Systeme den Nachteil, eine Topfzeit zu besitzen, so dass die Verarbeitung des angesetzten Lackes zeitlich begrenzt ist, und das Recyceln nicht verwendeten Lackes nicht möglich ist. Zudem erfolgt die Vernetzung über Melamin im Deckstrich ebenfalls bei Temperaturen von 160 °C, so dass dies ebenfalls für temperaturempfindliche Textilien ungeeignet ist.

In WO-A 2009100837 und DE-A 102006016638 werden Schlagschäume auf der Basis von Polyurethandispersionen offenbart, die bei einer Temperatur von 160 °C getrocknet werden.

In EP-A 222680 werden strahlenhärtbare Urethanacrylate in Acrylatmonomer offenbart, die zu einem Schaum aufgeschlagen und anschließend gehärtet werden. Es handelt sich hier um nicht wässrige Systeme, die große Mengen an niedermolekularen Acrylatmonomeren benötigen, um für das Schäumen ausreichend dünnflüssig zu sein. Die Acrylatmonomere sind reizend bis sensibilisierend und schränken daher die Verarbeitbarkeit ein.

In DE-A 3127945 werden Polyepoxyacrylate durch eine Polyisocyanat-Wasser-Reaktion aufgeschäumt und anschließend strahlengehärtet. Das wenige Wasser, welches in der Rezeptur verwendet wird, wird zur chemischen Reaktion mit dem Polyisocyanat benötigt. Diese Systeme besitzen eine sehr kurze Topfzeit, und die Härtung ist auf Elektronenstrahlhärtung beschränkt.

In DE-A 2328850 wird ein Polyether- oder Polyesterpolyol in Gegenwart von niedermolekularen Acrylatmonomeren durch eine Polyisocyanat-Wasser-Reaktion aufgeschäumt und anschließend strahlengehärtet.

JP-A 2008156544 offenbart strahlenhärtbare Schäume, die auf Polyisocyanat, Polyolen und einem ungesättigten Isocyanat basieren. Es handelt sich um nicht wässrige Systeme mit sehr kurzer Topfzeit.

JP-A 1993044175 beschreibt ein nicht strahlcnhärtbares Polyurethan, das in Gegenwart von niedermolekularen Acrylatmonomeren geschäumt und anschließend mit Elektronenstrahl gehärtet wird.

Strahlenhärtbare, wässrige Polyurethanacrylatdispersionen sind bekannt, wie z. B. in EP-A 753 531, EP-A 870 788 und EP-A 942 022. Sic werden als Bindemittel für Lacke und als Klebstoffe eingesetzt. Ihr Einsatz in strahlenhärtbaren Schäumen wurde bislang nicht beschrieben.

Es bestand somit die Aufgabe Dispersionen zur Verfügung zu stellen, die der exzellenten Verschäumbarkeit, guten Abriebfestigkeit, Kratz-, Knick- und Hydrolysebeständigkeit von wässrigen Polyurethandispersionen in nichts nachstehen. Es galt das Verfahren zur Härtung der auf wässrigen Polyurethandispersionen basierten Schlagschäume in Hinblick auf Schnelligkeit und niedrigere Temperaturen zu verbessern. Zudem müssen die Schaumrezepturen lange verarbeitbar sein, d. h. möglichst keine Topfzeit besitzen, und nach der Härtung sofort beständig gegen Chemikalien sein. Weiterhin müssen die Schäume eine geringe Rückstellkraft besitzen, damit sie mechanisch prägbar sind, wobei die Prägung einfach zu fixieren sein muss. Nach der Fixierung bzw. Härtung sollen die Schäume hingegen eine hohe Rückstellkraft besitzen.

Überraschender Weise wurde gefunden, dass sich strahlenhärtbare, wässrige Polyurethan(meth)acrylatdispersionen mechanisch gut aufschäumen lassen, und dass die so hergestellten Schlagschäume nach Ablüften des Wassers über aktinische Strahlung komplett durchhärtbar sind. Eine Durchhärtung des Schaums bis zum Trägermaterial war aufgrund der hohen Schichtdicke nicht zu erwarten, da die energiereiche Strahlung mit zunehmender Schichtdicke immer stärker absorbiert wird (Lambert-Beersches-Gesetz). Außerdem hätte man vermuten können, dass aufgrund der großen Oberfläche der Schaumstruktur eine verstärkte Inhibierung der radikalischen Polymerisation durch Luftsauerstoff stattfindet (R. Schwalm, UV Coatings, Elsevier, Amsterdam, 2007, S. 179-194). Die strahlengehärteten Schäume zeichnen sich durch eine hohe Ethanolfestigkeit direkt nach der Härtung aus. Zudem kann nach der Prägung des Schaums vor der Härtung mit aktinischer Strahlung die Prägung mittels Strahlenhärtung spontan und dauerhaft fixiert werden. Aufgrund der schnellen Härtung auch bei niedrigen Temperaturen eignen sich auch temperaturempfindliche Textilien als Substrat. Zudem ist die Schaumrezeptur lange verarbeitbar und besitzt keine Topfzeit.

Gegenstand dieser Erfindung ist ein Verfahren gemäß Anspruch 1 zur Herstellung von strahlengehärteten Schäumen, dadurch gekennzeichnet, dass die strahlengehärteten Schäume hergestellt werden durch
1) Aufschäumen einer wässrigen Zusammensetzung A),
2) thermische Trocknung des aus Schritt 1) hergestellten Schaums,
3) Hartung des Schaums durch aktinische Strahlung
wobei die Schritte 2) und 3) in beliebiger Reihenfolge und wiederholt abgewendet werden können.

Gcgebencnfalls wird der erfindungsgemäße, strahlengehärtete Schaum mit einem Deckstrich versehen.

Weiterhin Gegenstand dieser Erfindung sind strahlenhärtbare, wässrige Zusammensetzungen A) gemäß Anspruch 10 enthaltend
A1) ein oder mehrere strahlenhärtbare, wässrige Bindemittel,
A2) ein oder mehrere Verdicker,
A3) ein oder mehrere Schaumstabilisatoren.

Bevorzugt sind 80 bis 99,8 Gew.-% der Komponente A1), 0,1 bis 10 Gew.-% der Komponente A2) und 0,1 bis 10 Gew.% der Komponente A3), wobei die Mengenangaben auf die entsprechenden wasserfreien Komponenten A1) bis A3) bezogen sind und sich die Summe der wasserfreien Einzelkomponenten zu 100 Gew.-% addiert.

Als strahlenhärtbare, wässrige Bindemittel A1) eignen sich Dispersionen, die ungesättigte, strahlenhärtbare Gruppen enthalten, wie z. B. ungesättigte, strahlenhärtbare Gruppen enthaltende Dispersionen auf, Polyurethan-, Polyurethan-Polyacrylatbasis. Die ungesättigten, strahlenhärtbaren Gruppen können dabei an einem der genannten Polymere gebunden vorliegen und/oder in Form von strahlenhärtbaren Monomeren, so genannten Reaktivverdünnern, dispergiert neben den genannten Polymeren vorliegen.

Strahlenhärtbare, wässrige Bindemittel, wie sie als Komponente A1) eingesetzt werden können, sind kommerziell erhältlich z. B. als Bayhydrol® UV (Bayer MaterialScience AG, Leverkusen, DE).

Bevorzugt werden als Komponente A1) strahlenhärtbare, wässrige Bindemittel auf der Basis von Polyurethan(meth)acrylaten (i) eingesetzt, enthaltend als Aufbaukomponenten
A1.1) eine oder mehrere Verbindungen mit mindestens einer gegenüber Isocyanat reaktiven Gruppe und mindestens einer radikalisch polymerisierbaren, ungesättigten Gruppe,
A1.2) eine oder mehrere monomere und/oder polymere Verbindungen verschieden von A1.1).
A1.3) eine oder mehrere Verbindungen mit mindestens einer gegenüber Isocyanat reaktiven Gruppe und zusätzlich mindestens einer hydrophilierend wirkenden Gruppe,
A1.4) ein oder mehrere organische Polyisocyanate und
A1.5) gegebenenfalls von A1.1) bis A1.3) verschiedene Verbindungen mit mindestens einer Aminfunktion.

Neben dem Polyurethan(meth)acrylat (i) können in der wässrigen Dispersion noch ein oder mehrere Reaktivverdünner (ii), enthaltend mindestens eine strahlenhärtbare, ungesättigte Gruppe, vorliegen. "(Meth)acrylat" bezieht sich im Rahmen dieser Erfindung auf entsprechende Acrylat- oder Methacrylatfunktionen oder auf eine Mischung beider.

Vorteilhaft ist es, wenn der Gehalt an strahlenhärtbaren Doppelbindungen der Aufbaukomponente (i) und (ii) zwischen 0,3 und 6,0, bevorzugt zwischen 0,4 und 4,0, besonders bevorzugt zwischen 0,5 und 3,0 mol/kg nicht wässriger Bestandteile der Dispersion beträgt.

Komponente A1.1) enthält eine oder mehrere Verbindungen ausgewählt aus der Gruppe bestehend aus Polyester(meth)acrylaten, Polyether(meth)acrylaten, Polyetherester(meth)acrylaten, ungesättigten Polyestern mit Allyletherstruktureillheiten und Polyepoxy(meth)acrylaten mit einer OH-Zahl im Bereich von 15 bis 300 mg KOH/g Substanz und monohydroxyfunktionelle, (Meth)acrylatgruppenhaltige Alkohole.

Von den Polyester(mcth)acrylaten werden als Komponente A1.1) die hydroxylgruppenhaltigen Polyester(meth)acrylate mit einer OH-Zahl im Bereich von 15 bis 300 mg KOH/g Substanz, bevorzugt von 60 bis 200 mg KOH/g Substanz eingesetzt. Bei der Herstellung der hydroxyfunktionellen Polyester(meth)acrylate als Komponente A1.1) können insgesamt 7 Gruppen von Monomerbestandteilen zur Anwendung kommen:

Die erste Gruppe (a) enthält Alkandiole oder Diole oder Gemische dieser. Die Alkandiole weisen ein Molekulargewicht im Bereich von 62 bis 286 g/mol auf. Bevorzugt sind die Alkandiole ausgewählt aus der Gruppe von Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol. Bevorzugte Diole sind Ethersauerstoff-enthaltende Diole, wie Diethylenglykol, Triethylenglykol, Tetraethylenglykol, Dipropylenglykol, Tripropylenglykol, Polyethylen-, Polypropylen- oder Polybutylenglykole mit einem Zahlenmittel der Molmasse Mn im Bereich von 200 bis 4000, bevorzugt 300 bis 2000, besonders bevorzugt 450 bis 200 g/mol. Umsetzungsprodukte der zuvor genannten Diole mit ε-Caprolacton oder anderen Lactonen können ebenfalls als Diole zum Einsatz gelangen.

Die zweite Gruppe (b) enthält drei- und höherwertige Alkohole mit einem Molekulargewicht im Bereich von 92 bis 254 g/mol und/oder auf diesen Alkoholen gestartete Polyether. Besonders bevorzugte drei- und höherwertige Alkohole sind Glycerin, Trimethylolpropan, Pentaerythrit, Dipentaerythrit und Sorbit. Ein besonders bevorzugter Polyether ist das Umsetzungsprodukt von 1 mol Trimethylolpropan mit 4 mol Ethylenoxid.

Die dritte Gruppe (c) enthält Monoalkohole. Besonders bevorzugte Monoalkohole sind ausgewählt aus der Gruppe von Ethanol, 1- und 2-Propanol, 1- und 2-Butanol, 1- Hexanol, 2-Ethylhexanol, Cyclohexanol und Benzylalkohol.

Die vierte Gruppe (d) enthält Dicarbonsäuren mit einem Molekulargewicht im Bereich von 104 bis 600 g/mol und/oder deren Anhydride. Bevorzugte Dicarbonsäuren und deren Anhydride sind ausgewählt aus der Gruppe von Phthalsäure, Phthalsäureanhydrid, Isophthalsäure, Tetrahydrophthalsäure, Tetrahydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimere der Fettsäuren, wie sie unter der sechsten Gruppe (f) aufgelistet sind.

Die fünfte Gruppe (e) enthält Trimellithsäure oder Trimellithsäureanhydrid.

Die sechste Gruppe (f) enthält Monocarbonsäuren, wie z. B. Benzoesäure, Cyclohexancarbonsäure, 2-Ethylhexansäure, Capronsäure, Caprylsäure, Caprinsäure, Laurinsäure, und natürliche und synthetische Fettsäuren, wie z. B. Laurin-, Myristin-, Palmitin-, Margarin-, Stearin-, Behen-, Cerotin-, Palmitolein, Öl-, Icosen-, Linol-, Linolen- und Arachidonsäure.

Die siebte Gruppe (g) enthält Acrylsäure, Methacrylsäure und/oder dimere Acrylsäure.

Geeignete hydroxylgruppenhaltige Polyester(meth)acrylate A1.1) enthalten das Umsetzungsprodukt von mindestens einem Bestandteil aus Gruppe (a) oder (b) mit mindestens einem Bestandteil aus Gruppe (d) oder (e) und mindestens einem Bestandteil aus Gruppe (g).

Besonders bevorzugte Bestandteile aus der Gruppe (a) sind ausgewählt aus der Gruppe bestehend aus Ethandiol, 1,2- und 1,3-Propandiol, 1,4-Butandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoffenthaltende Diole, ausgewählt aus der Gruppe von Diethylenglykol, Triethylenglykol, Tetraethylenglykol, Dipropylenglykol, und Tripropylenglykol. Bevorzugte Bestandteile aus der Gruppe (b) sind ausgewählt aus der Gruppe von Glycerin, Trimethylolpropan, Pentaerythrit oder das Umsetzungsprodukt von 1 mol Trimethylolpropan mit 4 mol Ethylenoxid. Besonders bevorzugte Bestandteile aus den Gruppen (d) bzw. (e) sind ausgewählt aus der Gruppe von Phthalsäureanhydrid, Isophthalsäure, Tetrahydrophthalsäureanhydrid, Hexahydrophthalsäure, Hexahydrophthal-säureanhydrid, Maleinsäureanhydrid, Fumarsäure, Bernsteinsäureanhydrid, Glutarsäure, Adipinsäure, Dodecandisäure, hydrierte Dimere der Fettsäuren, wie sie unter der 6. Gruppe (f) aufgelistet sind und Trimellithsäureanhydrid. Bevorzugter Bestandteil aus der Gruppe (g) ist Acrylsäure.

Gegebenenfalls können in diese Polyester(meth)acrylate auch aus dem Stand der Technik allgemein bekannte, dispergierend wirkende Gruppen eingebaut werden. So können als Alkoholkomponente anteilig Polyethylenglykole und/oder Methoxypolyethylenglykole verwendet werden. Als Verbindungen können auf Alkoholen gestartete Polyethylenglykole, Polypropylenglykole und deren Blockcopolymere sowie die Monomethylether dieser Polyglykole verwendet werden. Besonders geeignet ist Polyethylenglykol-mono-methylether mit einem Zahlenmittel der Molmasse Mn im Bereich von 500 bis 1500 g/mol.

Weiterhin ist es möglich, nach der Veresterung einen Teil der noch freien, nicht veresterten Carboxylgruppen, insbesondere die der (Meth)acrylsäure, mit Mono-, Di- oder Polyepoxiden umzusetzen. Bevorzugt als Polyepoxide sind die Glycidylether von monomerem, oligomerem oder polymerem Bisphenol-A, Bisphenol-F, Hexandiol und/oder Butandiol oder deren ethoxylierte und/oder propoxylierte Derivate. Diese Reaktion kann insbesondere zur Erhöhung der OH-Zahl des Polyester(meth)acrylats verwendet werden, da bei der Polyepoxid-Säure-Reaktion jeweils eine OH-Gruppe entsteht. Die Säurezahl des resultierenden Produkts liegt zwischen 0 und 20 mg KOH/g, bevorzugt zwischen 0 und 10 mg KOH/g und besonders bevorzugt zwischen 0 und 5 mg KOH/g Substanz. Die Reaktion wird bevorzugt durch Katalysatoren wie Triphenylphosphin, Thiodiglykol, Ammonium- und/oder Phosphoniumhalogeniden und/oder Zirkon- oder Zinnverbindungen wie Zinn(II)ethylhexanoat katalysiert.

Die Herstellung von Polyester(meth)acrylaten wird auf der Seite 3, Zeile 25 bis Seite 6, Zeile 24 der DE-A 4 040 290, auf Seite 5, Zeile 14 bis Seite 11, Zeile 30 der DE-A 3 316 592 und Seite 123 bis 135 von P. K. T. Oldring (Ed.) in Chemistry & Technology of UV & EB Fonnulations For Coatings, Inks & Paints, Vol. 2, 1991, SITA Technology, London, beschrieben.

Ebenfalls geeignet als Komponente A1.1) sind hydroxylgruppenhaltige Polyether(meth)acrylate, die aus der Umsetzung von Acrylsäure und/oder Methacrylsäure mit Polyethern hervorgehen, so z. B. Homo-, Co- oder Blockcopolymerisate von Ethylenoxid, Propylenoxid und/oder Tetrahydrofuran auf beliebigen hydroxy- und/oder aminfunktionellen Startennolekülen, wie z. B. Trimethylolpropan, Ethylenglykol, Propylenglykol, Diethylenglykol, Dipropylengykol, Glycerin, Pentaerythrit, Neopentylglykol, Butandiol und Hexandiol.

Ebenfalls geeignet als Komponente A1.1) sind die an sich bekannten hydroxylgruppenhaltigen Polyepuxy(meth)acrylate mit einer OH-Zahl im Bereich von 20 bis 300 mg KOH/g, bevorzugt von 100 bis 280 mg KOH/g, besonders bevorzugt von 150 bis 250 mg KOH/g oder hydroxylgruppenhaltige Polyurethan(meth)acrylate mit einer OH-Zahl im Bereich von 20 bis 300 mg KOH/g, bevorzugt von 40 bis 150 mg KOH/g, besonders bevorzugt von 50 bis 140 mg KOH/g. Solche Verbindungen werden ebenfalls auf Seite 37 bis 56 in P. K. T. Oldring (Ed.), Chemistry & Technology ofUV & EB Formulations For Coatings, Inks & Paints, Vol. 2, 1991, SITA Technology, London beschrieben. Hydroxylgruppenhaltige Polyepoxy(meth)acrylate basieren insbesondere auf Umsetzungsprodukten von Acrylsäure und/oder Methacrylsäure mit Polyepoxiden (Glycidylverbindungen) von monomeren, oligomeren oder polymeren Bisphenol-A, Bisphenol-F, Hexandiol und/oder Butandiol oder deren ethoxylierten und/oder propoxylierten Derivaten.

Ebenfalls geeignet als Komponente A1.1) sind monohydroxyfunktionelle, (Meth)acrylatgruppenhaltige Alkohole. Bei solchen monohydroxyfunktionellen, (Meth)acrylatgruppen-haltigen Alkoholen handelt es sich beispielsweise um 2-Hydroxyethyl(meth)acrylat, Caprolacton-verlängerte Modifikationen von 2-Hydroxyethyl(meth)acrylat wie Pemcure® 12A (Cognis, DE), 2-Hydroxypropyl-(meth)acrylat, 4-Hydroxybutyl(meth)acrylat, 3-Hydroxy-2,2-dimethylpropyl(meth)acrylat, die im Mittel monohydroxyfunktionellen Di-, Tri- oder Penta(meth)acrylate mehrwertiger Alkohole wie Trimethylolpropan, Glycerin, Pentaerythrit, Ditrimethylolpropan, Dipentaerythrit, ethoxyliertes, propoxyliertes oder alkoxyliertes Trimethylolpropan, Glycerin, Pentaerythrit, Ditrimethylolpropan, Dipentaerythrit oder deren technische Gemische.

Außerdem können auch Alkohole, die sich aus der Umsetzung von doppelbindungshaltigen Säuren mit gegebenenfalls doppelbindungshaltigen, monomeren Polyepoxidverbindungen erhalten lassen, als monohydroxyfunktionelle, (Meth)acrylatgruppen-haltige Alkohole eingesetzt werden. Bevorzugte Umsetzungsprodukte sind ausgewählt aus der Gruppe von (Meth)acrylsäure mit Glycidyl-(meth)acrylat oder dem Glycidylester tertiärer, gesättigter Monocarbonsäure. Tertiäre, gesättigte Monocarbonsäuren sind beispielsweise 2,2-Dimethylbuttersäure, Ethylmethylbutter-, Ethylmethylpentan-, Ethylmethylhexan-, Ethylmethylheptan- und/oder Ethylmethyloktansäure.

Bevorzugt sind hydroxyfunktionelle Acrylate, wie unter Komponente A1.1) aufgezählt, mit einer OH-Funktionalität von 1,5 bis 2,5, bevorzugt 1,8 bis 2,2, besonders bevorzugt 1,9 bis 2,1.

Die unter Komponente A1.1) aufgezählten Verbindungen können für sich alleine oder auch als Mischungen verwendet werden.

Die Komponente A1.2) enthält monomere Mono-, Di- und/oder Triole jeweils mit einem Molekulargewicht von 32 bis 240 g/mol, wie z. B. Methanol, Ethanol, I-Propanol, I-Butanol, I-Pentanol. I-Hexanol, 2-Propanol, 2-Butanol, 2-Ethylhexanol, Ethylenglykol, Diethylcnglykol, Triethylenglykol, Tetraethylcnglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohcxandimcthanol, 1,6-Hexandiol, 1,2- und 1,4-Cyclohexandiol, hydriertes Bisphenol A (2,2-Bis(4-hydroxycyclohexyl)propan), von Dimerfettsäuren abgeleitete Diole, 2,2-Dimethyl-3-hydroxypropionsäure-(2,2-dimethyl-3-hydroxypropylester), Glycerin, Trimethylolethan, Trimethylolpropan, Trimethylolbutan und/oder Rizinusöl. Bevorzugt sind Neopentylglykol, 1,4-Butandiol, 1,4-Cyclohexandimethanol, 1,6-Hexandiol und/oder Trimethylolpropan.

Des Weiteren enthält Komponente A1.2) oligomere und/oder polymere, hydroxyfunktionelle Verbindungen. Diese oligomeren und/oder polymeren, hydroxyfunktionellen Verbindungen sind beispielsweise Polyester, Polycarbonate, Polyethercarbonatpolyole, C2-, C3-, und/oder C4-Polyether, Polyetherester und/oder Polycarbonapolyester mit einer Funktionalität von 1,0 bis 3,0, jeweils mit einem Gewichtsmittel der Molmasse Mw im Bereich von 300 bis 4000, bevorzugt 500 bis 2500 g/mol.

Hydroxyfunktionelle Polyesteralkohole sind solche auf Basis von Mono-, Di- und Tricarbonsäuren mit monomeren Di- und Triolen, wie sie bereits als Komponente A1.2) aufgezählt wurden, sowie Polyesteralkohole auf Lacton-Basis. Bei den Carbonsäuren handelt es sich zum Beispiel um Phthalsäure, Isophthalsäure, Terephthalsäure, Trimellithsäure, Adipinsäure, Maleinsäure, Fumarsäure, Tetrahydrophthalsäure, Hexahydrophthalsäure, Malonsäure, Bernsteinsäure, Glutarsäure, Pimelinsäure, Korksäure, Sebacinsäure, Dodecandisäure, hydrierte Dimere der Fettsäuren sowie gesättigte und ungesättige Fettsäuren, wie z. B. Palmitinsäure, Stearinsäure, Myristoleinsäure, Palmitoleinsäure, Ölsäure, Linolsäure, Linolensäure, Rizinolsäure und deren technische Gemische. Von den Di- und Tricarbonsäuren können auch die analogen Anhydride verwendet werden.

Hydroxyfunktionelle Polyetherole sind beispielsweise durch Polymerisation von cyclischen Ethern oder durch Umsetzung von Alkylenoxiden mit einem Startermolekül erhältlich.

Hydroxyfunktionelle Polycarbonate sind hydroxyl-terminierte Polycarbonate, die durch Umsetzung von Diolen, Lacton-modifizierten Diolen oder Bisphenolen, z. B. Bisphenol A, mit Phosgen oder Kohlensäurediestern, wie Diphenylcarbonat oder Dimethylcarbonat, zugängliche Polycarbonate. Hydroxyfunktionelle Polyethercarbonatpolyole sind solche, wie sie zum Aufbau von Polyurethandispersionen in DE-A 102008000478 beschrieben werden.

Bevorzugt als Komponente A1.2) sind die polymeren, hydroxyfunktionellen Polyester, Polycarbonate, Polyethercarbonatpolyole, C2-, C3-, und/oder C4-Polyether, Polyetherester und/oder Polycarbonatpolyester mit einer mittleren OH-Funktionalität von 1,8 bis 2,3, besonders bevorzugt 1,9 bis 2,1. Die Komponente A1.4) sind Polyisocyanate ausgewählt aus der Gruppe von aromatischen, araliphatischen, aliphatischen oder cycloaliphatischen Polyisocyanaten oder Mischungen solcher Polyisocyanate. Geeignete Polyisocyanate sind z. B. 1,3-Cyclohexandiisocyanat, 1-Methyl-2,4-diisocyanatocyclohexan, 1-Methyl-2,6-diisocyanato-cyclohexan, Tetramethylendiisocyanat, 4,4'-Diisocyanatodiphenylmethan, 2,4'-Diisocyanatodiphenylmethan, 2,4-Diisocyanatotoluol, 2,6-Diisocyanatotoluol, α,α,α',α'-Tetra-methyl- m- oder -p-Xylylendüsocyanat, 1,6-Hexamethylendiisocyanat, 1-Isocyanato-3,3,5-trimethyl-5-isocyanatomethylcyclohexan (Isophorondiisocyanat oder IPDI), 4,4'-Diisocyanato-dicyclohexylmethan, 4-Isocyanatomethyl-1,8-octan-diisocyanat (Triisocyanatononan, TIN) (EP-A 928 799), Homologe bzw. Oligomere dieser aufgezählten Polyisocyanate mit Biuret-, Carbodiimid-, Isocyanurat-, Allophanat-, Iminooxadiazindion- und/oder Uretdiongruppen und deren Mischungen.

Ebenfalls geeignet als Komponente A1.4) sind Verbindungen mit mindestens zwei freien Isocyanatgruppen, mindestens einer Allophanatgruppe und mindestens einer über die Allophanatgruppe gebundenen, radikalisch polymerisierbaren C=C-Doppelbindung, wie sie als Komponente a) in WO-A 2006089935 beschrieben werden.

Bevorzugt als Komponente A1.4) sind 1,6-Hexamethylendiisocyanat, 1-Isocyanato-3,3,5-trimethyl-5-isocyanatomethylcyclohexan (Isophorondiisocyanat oder IPDI) und 4, 4'-Diisocyanato-dicyclohexylmethan, Homologe bzw. Oligomere von 1,6-Hexamethylendiisocyanat, 1-Isocyanato-3,3,5-trimethyl-5-isocyanatomethylcyclohexan (Isophorondiisocyanat oder IPDI) und 4,4'-Diisocyanato-dicyclohexylmethan mit Biuret-, Carbodiimid-, Isocyanurat-, Allophanat-, Iminooxadiazindion- und/oder Uretdiongruppen sowie Allophanat(meth)acrylate wie in WO-A 2006089935 beschrieben und deren Mischungen.

Die Komponente A1.3) umfasst Verbindungen mit mindestens einer gegenüber Isocyanat reaktiven Gruppe und zusätzlich mindestens einer hydrophilierend wirkenden Gruppe.

Zu den hydrophilierend wirkenden Gruppen gehören ionische Gruppen A1.4.1) und/oder die aus potentiell ionischen Gruppen A.1.3.2) hervorgehenden (beispielsweise durch Salzbildung) ionischen Gruppen A1.3.1), die anionischer Natur A.1.3.1.1) wie beispielsweise Sulfonium-, Phosphonium-, Carboxylat-, Sulfonat-, Phosphonat-Gruppen oder kationischer Natur A.1.3.1.2) wie beispielsweise Ammonium-Gruppen sein können, potentiell ionische Gruppen A.1.3.2), d.h. Gruppen, die beispielsweise durch Salzbildung in ionische Gruppen A.1.3.1) überführt werden können und/oder nicht-ionische Gruppen A.1.3.3) wie beispielsweise Polyethergruppen, die durch isocyanatreaktive Gruppen in die Makromoleküle eingebaut werden können. Bevorzugt geeignete isocyanatreaktive Gruppen sind Hydroxyl- und Aminogruppen.

Verbindungen enthaltend potentiell ionische Gruppen A.1.3.2) umfassen Verbindungen mit potentiell anionischen Gruppen A.1.3.2.1) wie beispielsweise Mono- und Dihydroxycarbonsäuren, Mono- und Diaminocarbonsäuren, Mono- und Dihydroxysulfonsäuren, Mono- und Diaminosulfonsäuren, Mono- und Dihydroxyphosphonsäuren, Mono- und Diaminophosphonsäuren und/oder Verbindungen mit potentiell kationischen Gruppen A.1.3.2.2) wie beispielsweise Ethanolamin, Diethanolamin, Triethanolamin, 2-Propanolamin, Dipropanolamin, Tripropanolamin, N-Methylcthanolamin, N-Methyldiethanolamin und N,N-Dimethylethanolamin.

Bevorzugte Verbindungen enthaltend potentiell anionischen Gruppen A.1.3.2.1) sind ausgewählt aus der Gruppe bestehend aus Dimethylolpropionsäure, Dimethylolbuttersäure, Hydroxypivalinsäure, N-(2-Aminoethyl)-alanin, 2-(2-Amino-ethylamino)-ethansulfonsäure, Ethylendiamin-propyl- oder - butylsulfonsäure, 1,2- oder 1,3-Propylendiamin-ethylsulfonsäure, 3-(Cyclohexylamino)propan-1-sulfonsäure, Äpfelsäure, Zitronensäure, Glykolsäure, Milchsäure, Glycin, Alanin, Taurin, Lysin, 3,5-Diaminobenzoesäure, ein Additionsprodukt von Isophorondiamin (1-Amino-3,3,5-trimethy)-5-aminomethylcyclohexan, IPDA) und Acrylsäure (EP-A 916 647, Beispiel 1), das Addukt von Natriumbisulfit an Buten-2-diol-1,4- Polyethersulfonat sowie das propoxylierte Addukt aus 2-Butendiol und NaHSO₃, wie in DE-A 2 446 440 auf Seite 5-9, Formel I-III beschrieben.

Besonders bevorzugte Verbindungen enthaltend potentiell ionische Gruppen A.1.3.2) sind Carboxyl-, Sulfonsäuregruppen und/oder tertiäre Aminogruppen enthaltende Verbindungen wie beispielsweise 2-(2-Amino-ethylamino-)ethansulfonsäure, 3-(Cyclohexylamino)propan-1-sulfonsäure, das Additionsprodukt von Isophorondiamin und Acrylsäure (EP-A 916 647, Beispiel 1), Hydroxypivalinsäure, Dimethylolpropionsäure, Triethanolamin, Tripropanolamin, N-Methyldiethanolamin und/oder N,N-Dimethylethanolamin.

Ganz besonders bevorzugt enthält Komponente A.1.3) als Verbindungen mit potentiell ionischen Gruppen Hydroxypivalinsäure und / oder Dimethylolpropionsäure.

Geeignete nicht-ionisch hydrophilierend wirkende Gruppen A.1.3.3) sind beispielsweise Polyalkylenoxidether, die mindestens eine Hydroxy- oder Aminogruppe, sowie eine oder mehrere Alkylenoxideinheiten, von denen wenigstens eine Ethylenoxideinheit ist, enthalten. Diese Polyalkylenoxidether sind in an sich bekannter Weise durch Alkoxylierung geeigneter Startermoleküle zugänglich.

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Ebenfalls geeignet ist Trimethylolpropan, das nur an einer OH-Gruppe alkoxyliert wird. Bevorzugte Startermoleküle sind gesättigte Monoalkohole und Trimethylolpropan, das nur an einer OH-Gruppe alkoxyliert wird. Besonders bevorzugt wird Diethylenglykolmonobutylether als Startennolekül verwendet.

Für die Alkoxylierungsreaktion geeignete Alkylenoxide sind beispielsweise Ethylenoxid, 1-Butenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol% Ethylenoxideinheiten umfassen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen. Ebenfalls bevorzugt sind Trimethylolpropan-gestartete Polyalkylenoxide mit einer OH-Funktionalität von 2, wie z. B. Tegomer^{®} D 3403 (Evonik Industries AG, Essen, DE) und Ymer® N 120 (Perstop AB, Schweden).

Die unter Komponente A.1.3.2.1) genannten Säuren werden durch Umsetzung mit Neutralisationsmitteln, wie Triethylamin, Ethyldiisopropylamin, Dimethylcyclohexylamin, Dimethylethanolamin, Ammoniak, N-Ethylmorpholin, LiOH, NaOH und / oder KOH in die entsprechenden Salze überführt. Der Neutralisationsgrad liegt dabei bevorzugt zwischen 50 und 125%. Der Neutralisationsgrad ist wie folgt definiert: Bei säurefunktionalisierten Polymeren als Quotient aus Base und Säure; bei basenfunktionalisierten Polymeren als Quotient aus Säure und Base. Liegt der Neutralisation über 100%, so wird bei säurefunktionalisierten Polymeren mehr Base zugegeben als Säuregruppen im Polymer vorhanden sind; bei basenfunktionalisierten Polymeren wird mehr Säure zugegeben als Basegruppen im Polymer vorhanden sind.

Die unter Komponente A.1.3.2.2) genannten Basen werden durch Umsetzung mit Neutralisationsmitteln, wie z. B. anorganische Säuren, wie beispielsweise Salzsäure, Phosphorsäure und / oder Schwefelsäure, und / oder organischen Säuren, wie beispielsweise Ameisensäure, Essigsäure, Milchsäure, Methan-, Ethan- und / oder p-Toluolsulfonsäure, in die entsprechenden Salze überführt. Der Neutralisationsgrad liegt dabei bevorzugt zwischen 50 und 125%.

Die unter Komponente A.1.3) aufgeführten Verbindungen können auch in Mischungen verwendet werden.

Zur Erhöhung der Molmasse der erfindungsgemäßen Polyurethanacrylate (i) werden Mono- und Diamine und/oder mono- oder difunktionelle Aminoalkohole als Komponente A.1.5) verwendet. Bevorzugte Diamine sind solche, die gegenüber den Isocyanatgruppen reaktiver sind als Wasser, da die Verlängerung des Polyesterurethan(meth)acrylats gegebenenfalls im wässrigen Medium stattfindet. Besonders bevorzugt sind die Diamine ausgewählt aus der Gruppe von Ethylendiamin, 1,6-Hexamethylendiamin, Isophorondiamin, 1,3-, 1,4-Phenylendiamin, Piperazin, 4,4'-Diphenylmethandiamin, aminofunktionelle Polyethylenoxide, aminofunktionelle Polypropylenoxide (bekannt unter dem Namen Jeffamin® D-Reihe [Huntsman Corp. Europe, Zavantem, Belgien]) und Hydrazin. Ganz besonders bevorzugt ist Ethylendiamin.

Bevorzugte Monoamine sind ausgewählt aus der Gruppe von Butylamin, Ethylamin und Amine der Jeffamin® M-Reihe (Huntsman Corp. Europe, Zavantem, Belgien), aminofunktionelle Polyethylenoxide, aminofunktionelle Polypropylenoxide und/oder Aminoalkohole.

Die Komponente (ii) sind Reaktiwerdünner, unter denen Verbindungen zu verstehen sind, die mindestens eine radikalisch polymerisierbare Gruppe, bevorzugt Acrylat- und Methacrylatgruppen, und bevorzugt keine gegenüber Isocyanat- oder Hydroxygruppen reaktiven Gruppen enthalten.

Bevorzugte Verbindungen (ii) weisen 2 bis 6 (Meth)acrylatgruppen auf, besonders bevorzugte 4 bis 6.

Besonders bevorzugte Verbindungen (ii) weisen einen Siedepunkt von mehr als 200°C bei Normaldruck auf.

Reaktivverdünner sind allgemein in P. K. T. Oldring (Herausgeber), Chemistry & Technology of UV & EB Formulations for Coatings, Inks & Paints, Vo. II, Chapter III: Reactive Diluents for UV & EB Curable Formulations, Wiley and SITA Technology, London 1997 beschrieben.

Reaktivverdünner sind beispielsweise die mit (Meth)acrylsäure vollständig veresterten Alkohole Methanol, Ethanol, 1-Propanol, 1-Butanol, 1-Pentanol, 1-Hexanol, 2-Propanol, 2-Butanol, 2-Ethylhexanol, Dihydrodicyclopentadienol, Tetrahydrofurfurylalkohol, 3,3,5-Trimethylhexanol, Octanol, Decanol, Dodecanol, Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A(2,2-Bis(4-hydroxycyclohexyl)propan), Glycerin, Trimethylolethan, Trimethylolpropan Trimethylolbutan, Pentaerythrit, Ditrimethylolpropan, Dipentaerythrit, Sorbitol sowie ethoxylierte und/oder propoxylierte Derivate der aufgeführten Alkohole und die bei der (Meth)acrylierung der vorgenannten Verbindungen anfallenden technischen Gemische.

Für die zur Herstellung der erfindungsgemäßen wässrigen Zusammensetzungen bevorzugten Polyurethan(meth)acrylat-basierten wässrigen Dispersionen können sämtliche aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden. Diese Methoden sind dem Fachmann bekannt, siehe z. B. Methoden der Organischen Chemie, Houben-Weyl, 4. Auflage, Band E20/Teil 2 auf Seite 1659, Georg Thieme Verlag, Stuttgart, 1987. Bevorzugt ist das Schmelz-Emulgier- und das Aceton-Verfahren. Besonders bevorzugt wird das Aceton-Verfahren.

Neben dem/den strahlenhärtbaren, wässrigen Bindemittel(n) können in Komponente (A1) auch Dispersionen auf Basis von auf Polyestern, Polyurethanen, Polyethern, Polyamiden, Polysiloxanen, Polyvinylethern, Polybutadienen, Polisoprenen, Chlorkautschuken, Polycarbonaten, Polyvinylestern, Polyvinylchloriden, Polyacrylaten und/oder Polyurethanen enthalten sein, die keine ungesättigten, strahlenhärtbaren Gruppen aufweisen. Damit kann der Grad der Vernetzungsdichte reduziert werden, die physikalische Trocknung beeinflusst, z. B. beschleunigt werden, oder eine Elastifizierung bzw. auch eine Haftungsanpassung vorgenommen werden.

Neben dem/den strahlenhärtbaren, wässrigen Bindemittel(n) können auch solche Dispersionen auf Basis von Polyestern, Polyurethanen, Polyethern, Polyamiden, Polyvinylestern, Polyvinylethern, Polysiloxanen, Polycarbonaten und /oder Polyacrylaten, in Komponente A1) enthalten sein, die funktionelle Gruppen, wie Alkoxysilangruppen, Hydroxygruppen und /oder gegebenenfalls in blockierter Form vorliegende Isocyanatgruppen aufweisen. So können Dual-Cure-Systeme hergestellt werden, die über zwei verschiedene Mechanismen ausgehärtet werden können.

Ebenfalls können der Komponente A1) Dual-Cure-Systeme, so genannte Vernetzter, zugesetzt werden. Es kommen bevorzugt nicht-blockierte und /oder blockierte Polyisocyanate, Polyaziridine, Polycarbodiimide sowie Melaminharze in Frage. Besonders bevorzugt sind nicht-blockierte und /oder blockierte, hydrophilierte Polyisocyanate. Bevorzugt werden ≤ 20 Gew.-%, besonders bevorzugt ≤ 10 Ges.-% an festem Vernetzer auf den Festgehalt des wässrigen, strahlenhärtbaren Bindemittels A1) zugesetzt.

Der Komponente A1) können auch Aminovernetzerharze, auf Melamin- oder Harnstoffbasis, und /oder Polyisocyanate mit freien oder mit blockierten Polyisocyanatgruppen, auf Basis von gegebenenfalls hydrophilierenden Gruppen enthaltenden Polyisocyanaten aus Hexamethylendiisocyanat, Isophorondiisocyanat und /oder Toluylidcndiisocyanat mit Urcthan-, Uretdion-, Iminoxadiazindiun-, Isocyanurat-, Biuret- und /oder Allophanatstrukturen zugesetzt sein. Als weitere Dual-Curc-Systeme sind auch Carbodiimids oder Polyaziridine möglich.

Vorteilhaft ist es, wenn der Gehalt an strahlenhärtbaren, ungesättigten Gruppen der Komponente A1) zwischen 0,3 und 6,0, bevorzugt zwischen 0,4 und 4,0, besonders bevorzugt zwischen 0,5 und 3,0 mol/kg nicht wässriger Bestandteile der Dispersion beträgt.

Vorteilhaft ist es, wenn der strahlengehärtete, freie Film der Komponente A1) eine Reißdehnung von 30 bis 1000%, bevorzugt 150 bis 700% aufweist. Dabei umfasst Komponente A1) neben dem/den strahlenhärtbaren, wässrigen Bindemittel(n) gegebenenfalls weitere nicht-strahlenhärtbare Bindemittel und/oder Dual-Cure-Systeme wie beschrieben.

Vorteilhaft ist es, wenn der strahlengehärtete, freie Film der Komponente A1) eine Reißfestigkeit von 2 bis 40 N/mm² aufweist. Dabei umfasst Komponente A1) neben dem/den strahlenhärtbaren, wässrigen Bindemitteln) gegebenenfalls weitere nicht-strahlenhärtbare Bindemittel und/oder Dual-Cure-Systeme wie beschrieben.

Als Schaumstabilisatoren A2) sind handelsübliche Stabilisatoren geeignet, wie beispielsweise wasserlösliche Fettsäureamide, Sulfosuccinamide, Kohlenwasserstoffsulfonate, -sulfate oder Fettsäuresalze, wobei der lipophile Rest bevorzugt 12 bis 24 Kohlenstoffatome enthält.

Bevorzugte Schaumstabilisatoren A2) sind Alkansulfonate oder -sulfate mit 12 bis 22 Kohlenstoffatomen im Kohlenwasserstoffrest, Alkylbenzosulfonate oder -sulfate mit 14 bis 24 Kohlenstoffatomen im Kohlenwasserstoffrest oder Fettsäureamide oder Fettsäuresalze mit 12 bis 24 Kohlenstoffatomen.

Bei vorgenannten Fettsäureamiden handelt es sich vorzugsweise um Fettsäureamide von Mono- oder Di-(ethanol)-aminen. Fettsäuresalze können beispielsweise Alkalimetallsalze, Aminsalze oder unsubstituierte Ammoniumsalze sein.

Solche Fettsäurederivate basieren typischerweise auf Fettsäuren wie Laurinsäure, Myristinsäure, Palmitinsäure, Ölsäure, Stearinsäure, Ricinolsäure, Behcnsäure oder Arachidinsäure, Kokosfettsäure, Talgfettsäure, Sojafettsäure und deren Hydrierungsprodukten.

Besonders bevorzugte Schaumstabilisatoren A2) sind Natriumlaurylsulfat, Sulfosuccinamide und Ammoniumstearate, sowie deren Mischungen.

Verdicker A3) im Sinne der Erfindung sind Verbindungen, die es ermöglichen, die Viskosität der resultierenden Mischung aus A1) bis A3) so einzustellen, dass die Erzeugung und Verarbeitung des erfindungsgemäßen Schaums begünstigt wird. Als Verdicker sind handelsübliche Verdicker geeignet, wie beispielsweise natürliche organische Verdicker, z. B. Dextrine oder Stärke, organisch abgewandelte Naturstoffe, z. B. Celluloseether oder Hydroxyethylcellulose, organisch, vollsynthetische, z. B. Polyacrylsäuren, Polyvinylpyrrolidone, Poly(meth)acrylverbindungen oder Polyurethane (assoziative Verdicker) sowie anorganische Verdicker, z. B. Betonite oder Kieselsäuren. Bevorzugt werden organische, vollsynthetische Verdicker eingesetzt.

Das strahlenhärtbare, wässrige Bindemittel A1) kann mit den in der Lacktechnologie bekannten Bindemitteln, Hilfsstoffen und Additiven, wie z. B. Pigmente, Farbstoffe oder Mattierungsmittel versetzt bzw. kombiniert werden. Dies sind Verlaufs- und Benetzungsadditive, Slip-Additive, Pigmente einschließlich Metallic-Effektpigmente, Füllstoffe, Nanopartikel, Lichtschutzpartikel, Anti-Vergilbungsadditive und Additive zur Reduktion der Oberflächenspannung.

Die Einarbeitung der Komponenten A2) und A3) sowie gegebenenfalls weitere aufgeführte Additive und/oder Dual-Cure-Systeme in das strahlenhärtbare, wässrige Bindemittel A1) erfolgt über Scherung und kann in beliebiger Reihenfolge erfolgen.

In die strahlenhärtbaren, wässrigen Bindemittel A1) können zusätzlich noch Antioxidantien und/oder Lichtschutzmittel eingearbeitet werden. Schließlich können auch Füllstoffe, Weichmacher, Pigmente, Kieselsäuresole, Aluminium-, Tondispersionen, Verlaufsmittel oder Thixotropiemittel enthalten sein. Je nach gewünschtem Eigenschaftsbild und Verwendungszweck der erfindungsgemäßen Schäume können bis zu 70 Gew.-%, bezogen auf Gesamttrockensubstanz, solcher Füllstoffe im Endprodukt enthalten sein.

Die Schaumherstellung durch Aufschäumen der wässrigen Zusammensetzung A) kann durch Eintrag von Gas und/oder unter Einwirkung entsprechender Scherenergie (z. B. mechanisches Rühren) oder durch handelsübliche Treibmittel erfolgen. Vorzugsweise wird als Gas Luft oder inerte Gase, wie z. B. Stickstoff, Kohlendioxid, Edelgase wie beispielsweise Argon, Neon, Helium, verwendet. Der Einsatz von inertem Gas zur Schaumherstellung kann vorteilhaft sein, um die Inhibierung durch Sauerstoff während der radikalischen Polymerisation zu unterbinden.

Bevorzugt erfolgt die Schaumherstellung in Schritt 1) unter Eintrag von Gas, besonders bevorzugt ist der Eintrag von Luft, bei gleichzeitiger Einwirkung von Scherenergie.

Die geschäumte Zusammensetzung kann auf verschiedenste Arten und Weisen auf verschiedenste Oberflächen oder in Formen appliziert werden wie z. B. Gießen, Rakeln, Walzen, Streichen, Spritzen oder Sprühen. Ebenso ist eine Formgebung durch ein Extrusionsverfahren möglich.

Während das geschäumte Material vor Trocknung eine bevorzugte Schaumdichtc von 200 bis 1000 g/l, insbesondere bevorzugt 300 bis 600 g/l aufweist, beträgt die Dichte des resultierenden erfindungsgemäßen Schaums nach der Trocknung vorzugsweise 50 bis 600 g/l, besonders bevorzugt 100 bis 500 g/l. Die Schaumdichte wird erreicht durch Aufschäumen einer definierten Menge A) in einem definierten Volumen durch Eintragen von Gas und/oder unter Einwirkung von Scherenergie. Das Aufschlagen kann beispielsweise durch einen Küchenhandmixer oder durch industrielle Mixer, wie z. B. Hansa Industrie-Mixer, Mondo Mixer, Oakes Mixer und Stork Schaumgenerator, erfolgen.

Die thermische Trocknung des Schaums 2) erfolgt im Allgemeinen bei einer Temperatur zwischen 25 °C und 150 °C, vorzugsweise zwischen 30 °C und 120 °C, besonders bevorzugt bei 40 °C bis 90 °C. Die Trocknung kann in einem konventionellen Trockner oder in einem Umluftofen erfolgen. Ebenfalls möglich ist eine Trocknung in einem Mikrowellen (HF)-Trockner oder einem Infrarot-Trockner. Auch die Trocknung durch Führen des mit Schaum versehenen Substrates über geheizte Oberflächen, z. B. Walzen, ist möglich.

Die erfindungsgemäßen Schäume haben nach dem Trocknungsschritt 2) typischerweise eine Dicke von 1 mm bis 100 mm, bevorzugt 1 mm bis 50 mm, besonders bevorzugt 1 mm bis 30 mm, wenn sie als Schicht z. B. auf einem Trennpapier appliziert werden.

Die erfindungsgemäßen Schäume können auch in mehreren Schichten beispielsweise zur Erzeugung besonders hoher Schaumauflagen, auf verschiedenste Substrate aufgetragen werden oder in Formen gegossen werden.

Darüber hinaus können die erfindungsgemäßen, geschäumten Zusammensetzungen auch in Kombination mit anderen Trägermaterialien wie z. B. textile Flächengebilde, Papier, mineralische Substrate, Holz, Metall, Kunststoff, etc. eingesetzt werden, beispielsweise durch vorheriges Auftragen (z. B. Beschichten).

Unter textilen Flächengebilden im Sinne der vorliegenden Erfindung sind beispielsweise Gewebe, Gewirke, gebundene und ungebundene Vliese zu verstehen. Die textilen Flächengebilde können aus synthetischen, natürlichen Fasern und/oder deren Mischungen aufgebaut sein. Grundsätzlich sind Textilien aus beliebigen Fasern für das erfindungsgemäße Verfahren geeignet.

Zur strahlenchemisch induzierten Polymerisation (Schritt 3) des in den Schritten 1) und 2) hergestellten Schaums ist elektromagnetische Strahlung geeignet, deren Energie, gegebenenfalls unter Zusatz von geeigneten Photoinitiatoren, ausreicht, um eine radikalische Polymerisation von (Meth)acrylat-Doppelbindungen zu bewirken.

Bevorzugt erfolgt die strahlenchemisch induzierte Polymerisation mittels Strahlung mit einer Wellenlänge von kleiner 400 nm, wie UV-, Elektronen-, Röntgen- oder Gamma-Strahlen. Besonders bevorzugt ist die UV-Strahlung, wobei die Härtung mit UV-Strahlung in Gegenwart von Fotoinitiatoren ausgelöst wird. Bei den Fotoinitiatoren wird prinzipiell zwischen zwei Typen unterschieden, dem unimolekularen (Typ (I) und dem bimolekularen (Typ (II). Geeignete (Typ (I)-Systeme sind aromatische Ketonverbindungen, wie z. B. Benzophenone in Kombination mit tertiären Aminen, Alkylbenzophenone, 4,4'-Bis(dimethylamno)benzophenon (Michlers Keton), Anthron und halogenierte Benzophenone oder Mischungen der genannten Typen. Weiter geeignet sind (Typ (II)-Initiatoren wie Benzoin und seine Derivate, Benzilketale, Acylphosphinoxide, 2,4,6-Trimethyl-benzoyldiphenylphosphinoxid, Bisacylphosphinoxide, Phenylglyoxylsäureester, Campherchinon, α-Aminoalkylphenone, α,a-Dialkoxyacetophenone und α-Hydroxyalkylphenone. Bevorzugt sind Fotoinitiatoren, die leicht in wässrige, strahlenhärtbare Bindemittel, einzuarbeiten sind. Solche Produkte sind beispielsweise Irgacur^{®} 500 (eine Mischung von Benzophenon und (1-Hydroxycyclohexyl)phenylketon, Fa. Ciba, Lampertheim, DE), Irgacure^{®} 819 DW (Phenylbis-(2, 4, 6-trimethylbenzoyl)phosphinoxid, Fa. Ciba, Lampertheim, DE), Esacure^{®} KIP EM (Oligo-[2-hydroxy-2-methyl-1-[4-(1-methylvinyl)-phenyl]-propanone], Fa. Lamberti, Aldizzate, Italien). Es können auch Gemische dieser Verbindungen eingesetzt werden.

Zur Einarbeitung der Photoinitiatoren können auch polare Lösemittel, wie z. B. Aceton und Isopropanol, verwendet werden.

Vorteilhaft wird die Strahlenhärtung in Schritt 3) bei 30 bis 70 °C durchgeführt, weil bei höherer Temperatur der Umsetzungsgrad an (Meth)acrylatgruppen tendenziell erhöht ist. Dies kann bessere Beständigkeitseigenschaften zur Folge haben. Allerdings ist bei der Strahlenhärtung eine mögliche Temperaturempfindlichkeit des Substrats zu berücksichtigen, so dass optimale Härtungsbedingungen für eine bestimmte Schaum-Substrat-Kombination vom Fachmann in einfachen Vorversuchen zu ermitteln sind.

Der oder die Strahler, die die radikalische Polymerisation auslösen, können dabei ortsfest sein und der Schaum wird durch geeignete übliche Vorrichtungen am Strahler vorbeibewegt oder die Strahler sind durch übliche Vorrichtungen beweglich, so dass der Schaum während der Härtung ortsfest ist. Es ist auch möglich die Bestrahlung z. B. in Kammern durchzuführen, bei denen das beschichtete Substrat in die Kammer eingebracht wird, anschließend die Strahlung für einen bestimmten Zeitraum eingeschaltet wird, und nach der Bestrahlung das Substrat wieder aus der Kammer entfernt wird. Gegebenenfalls wird unter Inertgasatmosphäre, d. h. unter Sauerstoffausschluss, gehärtet, um eine Inhibierung der radikalischen Vernetzung durch Sauerstoff zu verhindern.

Die erfindungsgemäßen Schäume sind vor Strahlenhärtung sehr gut prägbar, da sie vor der Strahlenhärtung eine niedrige Rückstellkraft besitzen und die Prägung kann innerhalb von Sekunden durch die Strahlenhärtung fixiert werden. Zudem zeichnen sich die strahlengehärteten Schäume durch gute Beständigkeiten gegenüber Wasser und alkoholischen Lösungen aus.

Die erfindungsgemäßen Schäume können nach Strahlenhärtung oberflächenbehandelt werden, z. B. durch Schleifen, Velourisieren, Rauhen und/oder Tumblen.

Gegebenenfalls wird der erfindungsgemäße, strahlengehärtete Schaum mit einem Deckstrich versehen, um dem Schaum bessere chemische Beständigkeiten zu verleihen oder mechanische, haptische oder optische Eigenschaften zu verändern. Dieser Deckstrich beruht beispielsweise auf wässrigen Dispersionen auf der Basis von auf Polyestern, Polyurethanen, Polyethern, Polyamiden, Polysiloxanen, Polyvinylethern, Polybutadienen, Polisoprenen, Chlorkautschuken, Polycarbonaten, Polyvinylestern, Polyvinylchloriden, Polyacrylaten und/oder Polyurethanen. Diesen Bindemitteln können Vernetzer zugesetzt werden, z. B. Aminovernetzerharze, auf Melamin- oder Harnstoffbasis, und /oder Polyisocyanate mit freien oder mit blockierten Polyisocyanatgruppen, auf Basis von gegebenenfalls hydrophilierenden Gruppen enthaltenden Polyisocyanaten aus Hexamethylendiisocyanat, Isophorondiisocyanat und /oder Toluylidendiisocyanat mit Urethan-, Uretdion-, Iminoxadiazindion-, Isocyanurat-, Biuret- und /oder Allophanatstrukturen. Als weitere Dual-Cure-Systeme sind auch Carbodiimide oder Polyaziridine möglich. Bevorzugt beruht der Deckstrich auf strahlenhärtbaren, wässrigen Bindemitteln, welche im Vergleich zu Melamin- oder Polyisocyanat-vernetzten Deckstrichen bei tieferen Temperaturen innerhalb von Sekunden vernetzt werden. Als strahlenhärtbare, wässrige Bindemittel eignen sich beispielsweise Dispersionen, die ungesättigte, strahlenhärtbare Gruppen enthalten, wie z. B. ungesättigte, strahlenhärtbare Gruppen enthaltende Dispersionen auf Polyester-, Polyurethan-, Polyepoxy(meth)acrylat-, Polyether-, Polyamid-, Polysiloxan-, Polycarbonat-, Polyepoxyacrylat-, Polyesteracrylat-, Polyurethan-Polyacrylat- und /oder Polyacrylatbasis. Die ungesättigten, strahlenhärtbaren Gruppen können dabei an einem der genannten Polymere gebunden vorliegen und/oder in Form von strahlenhärtbaren Monomeren, so genannten Reaktivverdünnern, dispergiert neben den genannten Polymeren vorliegen.

Gegenstand der vorliegenden Erfindung sind auch Substrate beschichtet mit den erfindungsgemäßen Schäumen. Aufgrund der hervorragenden anwendungstechnischen Eigenschaften eignen sich die erfindungsgemäßen Zusammensetzungen bzw. die aus ihnen erzeugten Schäume insbesondere zur Beschichtung bzw. Herstellung von beispielsweise Oberbekleidung, Kunstlederartikeln, Schuhen, Möbelbezugsstoffen, Automobil-Innenausstattungsartikeln und Sportgeräten.

### Beispiele

Der NCO-Gehalt wurde jeweils gemäß DIN 53185 titrimctrisch verfolgt.

Der Feststoffgehalt der Polyurethandispersion wurde gravimetrisch nach Abdampfen aller nichtflüchtigen Bestandteile gemäß DIN 53216 bestimmt.

Die mittlere Teilchengröße wurde durch Laser-Korrelationsspektroskopie ermittelt.

Die Auslaufzeit wurde gemäß DIN 53211 mit Hilfe des 4 mm DIN-Bechers bestimmt.

RT entspricht 23 °C.

### 1) Herstellung einer strahlenhärtbaren, wässrigen Polyurethanacrylatdispersion, Komponente A1

76,7 Teile des Polyepoxyacrylats AgiSyn^{®} 1010 (AGl Corp., Taipeh, Taiwan), Komponente A1.1), 609,1 Teile des Polycarbonatdiols Desmophen^{®} C 1200 (Bayer MaterialScience AG, Leverkusen, DE), Komponente A1.2), 5,2 Teile Neopentylglykol, Komponente A1.2), 45,2 Teile Dimethylolpropionsäure, Komponente A1.3), 82,1 Teile 4.4'-Diisocyanatodicyclohexylmethan, Komponente A1.4), 188,2 Teile 1-Isocyanato-3,3,5-trimethyl-5-isocyanatomethylcyclohexan, Komponente A1.4) und 0,2 Teile Dibutylzinndilaurat wurden in 350 Teilen Aceton gelöst und bis zu einem NCO-Gehalt von 2,1 Gew.% bei 60 °C unter Rühren umgesetzt. Es folgte die Neutralisation durch Zugabe und Unterrühren von 36,0 Teilen Ethyldiisopropylamin. Anschließend wurde die klare Lösung unter Rühren in 1600 Teile Wasser eingetragen. Daraufhin wurde eine Mischung aus 10,6 Teilen Ethylendiamin, Komponente A1.5), und 100 Teilen Wasser der Dispersion unter Rühren zugesetzt. Das Aceton wurde unter leichtem Vakuum aus der Dispersion abdestilliert. Es wurde eine strahlenhärtbare, wässrige Polyurethanacrylatdispersion 1) mit einem Feststoffgehalt von 39 Gew.-%, einer Auslaufzeit von 19 sec, einer mittleren Teilchengröße von 52 nm und einem pH-Wert von 8,4 erhalten.

### 2) Herstellung einer strahlenhärtbaren, wässrigen Polyurethanacrylatdispersion, Komponente A1

116,0 Teile 2-Hydroxyethylacrylat, Komponente A1.1), 222,2 Teile 1-Isocyanato-3,3,5-trimethyl-5-isocyanatomethylcyclohexan, Komponente A1.4), und 0,003 Teile Dibutylzinndilaurat wurden in 84,5 Teilen Aceton gelöst und bei 60 °C bis zu einem NCO-Gehalt von 8,9 Gew.% unter Rühren umgesetzt. Zu 108,0 Teilen der so erhalten Lösung wurden 560 Teile des Polycarbonatdiols Desmophen^{®} C 2200 (Bayer MaterialScience AG. Leverkuseo, DE). Komponente A1.2), 5,1 Teile Neopentylglykol, Komponente A1.2), 22,0 Teile des monofunktionellen Polyethers LB 25 (Bayer MaterialScience AG, Leverkusen, DE), Komponente A1.3), 19,6 Teile Dimethylolpropionsäure, Komponente A1.3), 170,3 Teile 4.4'-Diisocyanatodicyclohexylmethan, Komponente A1.4), 0,5 Teile Dibutylzinndilaurat und 730 Teile Aceton gegeben und bis zu einem NCO-Gehalt von 1,5 Gew.-% bei 60 °C unter Rühren umgesetzt. Es folgte die Neutralisation durch Zugabe und Unterrühren von 14,2 Teilen Triethylamin und 13,0 Teilen Ethylendiamin, Komponente A1.5), gelöst in 39 ml Wasser. Anschließend wurden 1350 Teile Wasser in die klare Lösung unter Rühren eingetragen. Im Anschluss wurde das Aceton unter leichtem Vakuum aus der Dispersion abdestilliert. Es wurde eine strahlenhärtbare, wässrige Polyurethandispersion 2) mit einem Feststoffgehalt von 39 Gew.-%, einer Auslaufzeit von 13 sec, einer mittleren Teilchengröße von 146 nm und einem pH-Wert von 8,6 erhalten.

### 3) Herstellung einer strahlenhärtbaren, wässrigen Polyurethanacrylatdispersion, Komponente A1

46,7 Teile des Polyepoxyacrylats AgiSyn^{®} 1010 (AGI Corp., Taipeh, Taiwan), Komponente A1.1), 625,0 Teile eines Polyesterdiols basierend auf Phthalsäureanyhdrid und Hexandiol mit einer OH-Zahl von 56, Komponente A1.2), 5,9 Teile Hexandiol, Komponente A1.2), 40,2 Teile Dimethylolpropionsäure, Komponente A1.3), 75,6 Teile Hexamethylendiisocyanat, Komponente A1.4), 153,2 Teile isocyanathaltigen Allophanatacrylats Laromer^{®} LR 9000 (BASF SE, Ludwigshafen, DE), Komponente A1.4), und 0,4 Teile Dibutylzinndilaurat wurden in 700 Teilen Aceton gelöst und bis zu einem NCO-Gehalt von 0,7 Gew.-% bei 60 °C unter Rühren umgesetzt. Es folgte die Neutralisation durch Zugabe und Unterrühren von 27,3 Teilen Triethylamin und 6,9 Teilen Ethylendiamin, Komponente A1.5), gelöst in 39 ml Wasser. Anschließend wurden 1700 Teile Wasser in die klare Lösung unter Rühren eingetragen. Das Aceton wurde unter leichtem Vakuum aus der Dispersion abdestilliert. Es wurde eine strahlenhärtbare, wässrige Polyurethandispersion 3) mit einem Feststoffgehalt von 38 Gew.-%, einer Auslaufzeit von 180 sec, einer mittleren Teilchengröße von 157 nm und einem pH-Wert von 8,0 erhalten.

### 4) Strahlenhärtbare, wässrige Polyurethanacrylatdispersion, Komponente A1

Als strahlenhärtbare, wässrige Polyurethandispersion 4) diente Bayhydrol^{®} UV XP 2736 (Bayer MaterialScience AG, Leverkusen, DE), welche anionisch hydrophiliert ist und auf Polyesteracrylat basiert.

### 5) Nicht-strahlenhärtbare, wässrige Polyurethandispersion (Vergleich)

Als nicht-strahlenhärtbare, wässrige Polyurethandispersion 5) diente Impranil^{®} DLC-F (Bayer MaterialScience AG, Leverkusen, DE), welche anionisch hydrophiliert ist.

**Tabelle 1: Formulierung von Lacken für die Zugprüfung**

| **UV-Lack** | **Gewichtsteile** |
|---|---|
| **UV-Dispersion** | 100,0 |
| **BYK^{®} 348¹** | 1,0 |
| **Irgacure^{®} 500²** | 1,5 |
| **Gesamt** | 102,5 |

| | |
|---|---|
| ¹ Benetzungsnvttel auf Basis eines polyethermodifizierten Diemthylpolysiloxans der Fa. BYK, Wesel, DE ² eine Mischung von Benzophenon und (1-Hydroxycyclohexyl)phenylketon der Fa. Ciba, Lampertheim, DE | |

Aus den strahlenhärtbaren, wässrigen Polyurethanacrylatdispersionen 1) bis 4) wurden freie Filme mit einer Schichtstärke von 300 µm hergestellt. Dafür wurden die Filme 10 Minuten bei 50 °C getrocknet und anschließend mit 500 mJ/cm² strahlengehärtet. Die freien Filme wurden einer Zugprüfung unterzogen.
- Zugprüfmaschine Zwicki 2,5KN (Fa. Zwick)
- Prüfnorm: DIN EN ISO 527-1-3
- Prüfklima: Normklima 23°C bei 50% rel. Feuchte
- Spannvorrichtung mit nachstellenden Druckluftklemmen
- Einspannlänge: 40 mm
- Vorkraft: 0,02 N/mm²
- Prüfgeschwindigkeit: 200 mm/mm²

**Tabelle 2: Zugprüfung der strahlengehärteten, freien Filme³**

| **Beispiel** | **1)** | **2)** | **3)** | **4)** |
|---|---|---|---|---|
| **Bruchdehnung [%]** | 206 | 146 | 115 | 80 |
| **Zugfestigkeit [N/mm²]** | 14 | 23 | 12 | 31 |

| | | | | |
|---|---|---|---|---|
| ³Werte beruhen auf dem Mittelwert von fünf Messungen | | | | |

**Tabelle 3: Formulierung der erfindungsgemäßen Schäume**

| **Schaum** | **Gewichtsteile** |
|---|---|
| **UV-Dispersion 1) bis 4)** | 390,0 |
| **BYK^{®} 348⁴** | 3,9 |
| **Irgacure^{®} 500⁵** | 4,9 |
| **Irgacure^{®}819⁶** | 0,9 |
| **Dicrylan^{®} FLN⁷** | 23,4 |
| **Borchigel^{®} LW 44⁸** | 10,6 |
| **Gesamt** | 433,7 |

| | |
|---|---|
| ⁴ Benetzungsmittel auf Basis eines polyethermodifizierten Diemthylpolysiloxans der Fa. BYK, Wesel, DE ⁵ eine Mischung von Benzophenon und (1-Hydroxycyclohexyl)phenylketon der Fa. Ciba, Lampertheim, DE ⁶ Bisacylphosphinoxid der Fa. Ciba, Lampertheim, DE ⁷ Schaumstabilisator auf Basis von Alkylamnoniumstearat der Fa. Huntsman Int. LLC, Salt Lake City, UT, USA ⁸ Nicht-ionogenes Verdickungsmittel auf Polyurethanbasis der Fa. OMG Borchers GmbH, Langenfeld, DE | |

### Herstellung der erfindungsgemäßen Schäume

In die UV-Dispersion wurde durch Scherung gemäß Tabelle 3 Benetzungsmittel, Photoinitiatoren und Schaumstabilisator eingearbeitet. Anschließend erfolgte das Aufschäumen durch Einschlagen von Luft mittels eines Küchenhandmixers. Alle Schäume wiesen eine endgültige Schaumdichte von 500 g/l auf. Zum Schluss erfolgte das Einrühren des Verdickungsmittels. Die so hergestellten Schäume wiesen eine homogene Bläschenverteilung auf.

Die Schäume wurden mittels eines Kastenrakels 1000 µm dick auf ein Trennpapier aufgetragen, 60 Minuten bei Raumtemperatur und anschließend acht Minuten bei 80 °C im Ofen (ohne Umluft) getrocknet. Anschließend wurden die Schäume bei 750 mJ/cm² strahlengehärtet.

**Tabelle 4: Formulierung des thermisch gehärteten Schaums (Vergleich)**

| **Schaum** | **Gewichtsteile** |
|---|---|
| **Dispersion 5)** | 390,0 |
| **BYK^{®} 348⁹** | 3,9 |
| **Dicrylan^{®} FLN¹⁰** | 23,4 |
| **Borchiger^{®} LW 44¹¹** | 10,6 |
| **Gesamt** | 427,9 |

| | |
|---|---|
| ⁹ Benetzungsmittel auf Basis eines polyethermodifizierten Diemthylpolysiloxans der Fa. BYK, Wcsel, DE ¹⁰ Schaumstabilisator auf Basis von Alkylamnoniumstearat der Fa. Huntsman Int. LLC, Salt Lake City, UT, USA ¹¹ Nicht-ionogenes Verdickungsmittel auf Polyurethanbasis der Fa. OMG Borchers GmbH, Langenfeld, DE | |

### Herstellung des thermisch gehärteten Schaums (Vergleich)

In die nicht-strahlenhärtbare, wässrige Polyurethandispersion 5) wurde durch Scherung gemäß Tabelle 4 Benetzungsmittel und Schaumstabilisator eingearbeitet. Anschließend erfolgte das Aufschäumen durch Einschlagen von Luft mittels eines Küchenhandmixers. Der Schaum wies eine endgültige Schaumdichte von 500 g/l auf. Zum Schluss erfolgte das Einrühren des Verdickungsmittels. Der so hergestellte Schaum wies eine homogene Bläschenverteilung auf.

Der Schaum wurde mittels eines Kastenrakels 1000 µm dick auf ein Trennpapier aufgetragen, 60 Minuten bei Raumtemperatur und anschließend acht Minuten bei 120 °C im Ofen (ohne Umluft) getrocknet. Eine Temperatur unterhalb von 120 °C war nicht möglich, da der Schaum bei niedrigeren Trocknungstemperaturen noch keine ausreichende mechanische Stabilität aufwies und bei Druck verklebte.

**Tabelle 5: Daten zur anwendungstechnischen Prüfung der Schäume**

| **Beispiel** | **1)** | **2)** | **3)** | **4)** | **5)** (**Vergleich**) |
|---|---|---|---|---|---|
| **Druckempfindlichkeit vor UV-Härtung¹²** | 0% | 0% | 0% | 20% | 100% |
| **Druckempfindlichkeit nach UV-Härtung¹²** | 100% | 80% | 60% | 80% | - |
| **Wasserbeständigkeit vor UV-Härtung¹³** | 100% | 80% | 20% | 40% | 100% |
| **Wasserbeständigkeit nach UV-Härtung¹³** | 100% | 100% | 100% | 100% | - |
| **Ethanol/Wasser(50%)-Beständigkeit vor UV-Härtung¹³** | 0% | 80% | 0% | 40% | 80% |
| **Ethanol/Wasser(50%)-Beständigkeit** nach **UV-Härtung¹³** | 60% | 100% | 40% | 80% | - |

| | | | | | |
|---|---|---|---|---|---|
| ¹² Zur Bestimmung wurde ein Ring (Wandstärke 1 mm, Durchmesser 5,7 cm) mit einem Gewicht von 200 g auf den Schaum gestellt. Die zu beobachtenden Veränderungen wurden nach folgender Notenskala bewertet: (Mit dieser Größe kann eine Aussage über die Rückstellkraft der Schäume getroffen werden.) 100% Note: Keine Veränderungen 80% Note: Leichter Abdruck, der sofort wieder verschwindet 60% Note: Leichter Abdruck gut erkennbar, verschwindet nach kurzer Dauer 40% Note: Deutlicher Abdruck, jedoch kein Papieruntergrund sichtbar (in der Mitte), leichte Rückbildung 20%.Note: Deutlicher Abdruck, Papieruntergrund leicht sichtbar, keine Rückbildung 0% Note: Scharfer Abdruck bis zum Papieruntergrund, keine Rückbildung ¹³ Mit einer Pipette wurde jeweils ein Tropfen Wasser bzw. Ethanol/Wasser, 50%ig auf den Schaum aufgetragen. Die Veränderung der Oberfläche wurde nach 24 h bei Raumtemperatur nach folgender Notenskala bewertet: 100% Note: Keine Veränderungen 80% Note: Schwache Vertiefung sichtbar, Oberfläche nicht zerstört 60% Note: Deutliche Vertiefung sichtbar, Oberfläche nicht zerstört 40% Note: Deutliche Vertiefung sichtbar, Oberfläche leicht zerstört 20% Note: Starke Vertiefung sichtbar, Oberfläche zerstört 0% Note: Oberfläche vollständig zerstört | | | | | |

Tabelle 2 zeigt, dass die Polyurethanacrylatdispersionen 1) bis 4) sehr flexible, strahlengehärtete Filme ergaben. Eine solche Flexibilität ist notwendig, um letztlich weiche, strahlengehärtete Schäume zu erhalten, wie sie für den Textilbereich notwendig sind.

Die erfindungsgemäßen Schäume 1) bis 4) besaßen nach Trocknung bei 80 °C und vor Strahlenhärtung eine geringe Rückstellkraft (Tabelle 5), d. h. sie waren sehr gut prägbar. Nach der Strahlenhärtung war die Rückstellkraft deutlich erhöht. Die strahlengehärteten Schäume ließen sich zwar eindrücken, nahmen aber nach der Belastung wieder ihre Ausgangsform an. Dies zeigt, dass sich bei den erfindungsgemäß hergestellten Schäumen vor der Strahlenhärtung eine Prägung aufbringen lässt, die dann durch Strahlenhärtung fixierbar ist.

Vergleichsbeispiel 5) besitzt bereits nach thermischer Trocknung eine sehr hohe Rückstellkraft, d. h. eine mechanische Prägung ist nicht mehr möglich.

Die Empfindlichkeit gegen Wasser bzw. Ethanol/Wasser, 50%ig wurde durch die Strahlenhärtung maßgeblich reduziert. Schaum 2) zeigte sich sogar gänzlich unempfindlich gegen Ethanol/Wasser 50%ig und wäre geeignet, gegen alkoholische Haushaltsreiniger zu bestehen. Die Beispiele zeigen, dass die Vernetzung mittels Strahlenhärtung erfolgreich bei den erfindungsgemäß hergestellten Schäumen verlief. Zugleich ist dies ein bemerkenswertes Ergebnis, da zu erwarten war, dass aufgrund der sehr großen Oberfläche des Schaums eine starke Sauerstoffinhibierung der radikalischen Polymerisation stattfindet, und dass wegen der Schichtdicke von 1000 µm die Vernetzung in der Tiefe stark nachlässt, was aber nicht der Fall war. Im Vergleich zum Schaum aus Beispiel 5), der bei 120 °C getrocknet wurde, erreichten die erfindungsgemäßen Schäume vergleichbar gute Beständigkeiten nach Strahlenhärtung, mussten aber lediglich bei 80 °C getrocknet werden. Die erfindungsgemäßen Schäume eignen sich daher, um im Direktstreichverfahren auf temperaturempfindliche Textilien, wie beispielsweise Elastan^{®} aufgebracht zu werden.

## Patentansprüche

1. Verfahren zur Herstellung von strahlengehärteten Schäumen, **dadurch gekennzeichnet, dass** die strahlengehärteten Schäume hergestellt werden durch
1) in einem ersten Schritt Aufschäumen einer wässrigen Zusammensetzung A), anschließend
2) thermische Trocknung des aus Schritt 1) hergestellten Schaums,
3) Härtung des Schaums durch aktinische Strahlung
oder
1) in einem ersten Schritt Aufschäumen der wässrigen Zusammensetzung A) anschließend
2) Härtung des in Schritt 1) hergestellten Schaums durch aktinische Strahlung,
3) thermische Trocknung des Schaums,
wobei jeweils die Schritte 2) und 3) beliebig oft wiederholt werden können,
**dadurch gekennzeichnet, dass** die wässrige Zusammensetzung A) die Komponenten
A1) ein oder mehrere strahlenhärtbare, wässrige Bindemittel,
A2) ein oder mehrere Verdicker,
A3) ein oder mehrere Schaumstabilisatoren
enthält, und
**dadurch gekennzeichnet, dass** Komponente A1) Polyurethan(meth)acrylate (i) enthält.

2. Verfahren zur Herstellung von strahlengehärteten Schäumen gemäß Anspruch 1, wobei das Polyurethan(meth)acrylat (i)
A1.1) eine oder mehrere Verbindungen mit mindestens einer gegenüber Isocyanat reaktiven Gruppe und mindestens einer radikalisch polymerisierbaren, ungesättigten Gruppe,
A1.2) eine oder mehrere monomere und/oder polymere Verbindungen verschieden von A1.1),
A1.3) eine oder mehrere Verbindungen mit mindestens einer gegenüber Isocyanat reaktiven Gruppen und zusätzlich mindestens einer hydrophilierend wirkenden Gruppe und
A 1.4) ein oder mehrere organische Polyisocyanate
enthält.

3. Verfahren zur Herstellung von strahlengehärteten Schäumen gemäß Anspruch 2, **dadurch gekennzeichnet, dass** eine Komponente A1.5) enthalten ist, die von A1.1) bis A1.3) verschieden ist und mindestens eine Aminfunktion besitzt.

4. Verfahren zur Herstellung von strahlengehärteten Schäumen gemäß einem der Ansprüche 1 bis 3, **dadurch gekennzeichnet, dass** Komponente A1) Polyurethan(meth)acrylate (i) und Komponente (ii), einen Reaktivverdünner mit mindestens einer radikalisch polymerisierbaren Gruppe enthält.

5. Verfahren zur Herstellung von strahlengehärteten Schäumen gemäß einem der Ansprüche 1 bis 4, **dadurch gekennzeichnet, dass** der Gehalt an strahlenhärtbaren, ungesättigten Gruppen der Komponente A1) zwischen 0,3 und 6,0 mol/kg bezogen auf die Summe der Gewichteile der nicht wässrigen Bestandteile der Komponente A1) beträgt.

6. Verfahren zur Herstellung von strahlengehärteten Schäumen gemäß einem der Ansprüche 1 bis 5, **dadurch gekennzeichnet, dass** das Aufschäumen unter Eintrag von Gas und/oder durch Einwirkung von Scherenergie erfolgt.

7. Verfahren zur Herstellung von strahlengehärteten Schäumen gemäß einem der Ansprüche 1 bis 6, **dadurch gekennzeichnet, dass** das geschäumte Material vor der Trocknung eine Schaumdichte von 200 bis 1000 g/l und nach der Trocknung eine Schaumdichte von 50 bis 600 g/l aufweist.

8. Verfahren zur Herstellung von strahlengehärteten Schäumen gemäß einem der Ansprüche 1 bis 7, **dadurch gekennzeichnet, dass** die thermische Trocknung (Schritt 2 bzw. 3) bei 25 bis 150 °C erfolgt.

9. Strahlengehärtete Schäume hergestellt nach dem Verfahren gemäß einem der Ansprüche 1 bis 8 enthaltend mindestens ein Polyurethan(meth)acrylat (i) enthaltend
A1.1) eine oder mehrere Verbindungen mit mindestens einer gegenüber Isocyanat reaktiven Gruppe und mindestens einer radikalisch polymerisierbaren, ungesättigten Gruppe,
A 1.2) eine oder mehrere monomere und/oder polymere Verbindungen verschieden von A1.1).
A1.3) eine oder mehrere Verbindungen mit mindestens einer gegenüber Isocyanat reaktiven Gruppe und zusätzlich mindestens einer hydrophilierend wirkenden Gruppe und
A1.4) ein oder mehrere organische Polyisocyanate

10. Strahlenhärtbare, geschäumte wässrige Zusammensetzungen A) enthaltend die Komponenten
A1) ein oder mehrere strahlenhärtbare, wässrige Bindemittel,
A2) ein oder mehrere Verdicker,
A3) ein oder mehrere Schaumstabilisatoren,
**dadurch gekennzeichnet, dass** als Komponente A1) mindestens ein Polyurethan(meth)acrylat (i) enthaltend
A1.1) eine oder mehrere Verbindungen mit mindestens einer gegenüber Isocyanat reaktiven Gruppe und mindestens einer radikalisch polymerisierbaren, ungesättigten Gruppe,
A1.2) eine oder mehrere monomere und/oder polymere Verbindungen verschieden von A1.1),
A1.3) eine oder mehrere Verbindungen mit mindestens einer gegenüber Isocyanat reaktiven Gruppe und zusätzlich mindestens einer hydrophilierend wirkenden Gruppe und
A1.4) ein oder mehrere organische Polyisocyanate
enthalten ist.

11. Verwendung der strahlengehärteten Schäume gemäß Anspruch 9 zur Beschichtung von Substraten.

12. Substrate beschichtet mit den strahlengehärteten Schäumen gemäß Anspruch 9.

## Claims

1. Process for the production of radiation-cured foams, **characterized in that** the radiation-cured foams are produced by
1) in a first step, foaming of an aqueous composition A), subsequently
2) thermal drying of the foam produced from step 1),
3) curing of the foam by actinic radiation
or
1) in a first step, foaming of the aqueous composition A), subsequently
2) curing, by actinic radiation, of the foam produced in step 1),
3) thermal drying of the foam,
it being possible for steps 2) and 3) to be repeated as often as desired,
**characterized in that** the aqueous composition A) comprises the components
A1) one or more radiation-curable aqueous binders,
A2) one or more thickeners,
A3) one or more foam stabilizers, and
**characterized in that** component A1) comprises polyurethane (meth)acrylates (i).

2. Process for the production of radiation-cured foams, according to claim 1, wherein the polyurethane (meth)acrylate (i) contains
A1.1) one or more compounds with at least one group which is reactive towards isocyanate and at least one unsaturated group which can undergo free radical polymerization,
A1.2) one or more monomeric and/or polymeric compounds which differ from A1.1),
A1.3) one or more compounds with at least one group which is reactive towards isocyanate and additionally at least one group having a hydrophilizing action and
A1.4) one or more organic polyisocyanates.

3. Process for the production of radiation-cured foams, according to claim 2, **characterized in that** a component A1.5) which differs from A1.1) to A1.3) and has at least one amine function is present.

4. Process for the production of radiation-cured foams according to one of claims 1 to 3, **characterized in that** component A1) comprises polyurethane (meth) acrylates (i) and component (ii), a reactive diluent with at least one group which can undergo free radical polymerization.

5. Process for the production of radiation-cured foams according to one of claims 1 to 4, **characterized in that** the content of radiation-curable unsaturated groups of component A1) is between 0.3 and 6.0 mol/kg, based on the sum of the parts by weight of the non-aqueous constituents of component A1).

6. Process for the production of radiation-cured foams, according to one of claims 1 to 5, **characterized in that** the foaming is carried out with introduction of gas and/or by the action of shearing energy.

7. Process for the production of radiation-cured foams, according to one of claims 1 to 6, **characterized in that** the foamed material has a foam density of from 200 to 1,000 g/l before the drying and a foam density of from 50 to 600 g/l after the drying.

8. Process for the production of radiation-cured foams, according to one of claims 1 to 7, **characterized in that** the thermal drying (step 2 or 3) is carried out at 25 to 150 °C.

9. Radiation-cured foams produced by the process according to one of claims 1 to 8, comprising at least one polyurethane (meth) acrylate (i) comprising
A1.1) one or more compounds with at least one group which is reactive towards isocyanate and at least one unsaturated group which can undergo free radical polymerization,
A1.2) one or more monomeric and/or polymeric compounds which differ from A1.1),
A1.3) one or more compounds with at least one group which is reactive towards isocyanate and additionally at least one group having a hydrophilizing action and
A1.4) one or more organic polyisocyanates.

10. Radiation-curable, foamed aqueous compositions A) comprising the components
A1) one or more radiation-curable aqueous binders,
A2) one or more thickeners,
A3) one or more foam stabilizers,
**characterized in that**, as component A1), at least one polyurethane (meth) acrylate (i) comprising
A1.1) one or more compounds with at least one group which is reactive towards isocyanate and at least one unsaturated group which can undergo free radical polymerization,
A1.2) one or more monomeric and/or polymeric compounds which differ from A1.1),
A1.3) one or more compounds with at least one group which is reactive towards isocyanate and additionally at least one group having a hydrophilizing action and
A1.4) one or more organic polyisocyanates, is present.

11. Use of the radiation-cured foams according to claim 9 for coating substrates.

12. Substrates coated with the radiation-cured foams according to claim 9.

## Revendications

1. Procédé de fabrication de mousses durcies par rayonnement, **caractérisé en ce que** les mousses durcies par rayonnement sont fabriquées par
1) lors d'une première étape, le moussage d'une composition aqueuse A), puis
2) le séchage thermique de la mousse fabriquée à l' étape 1),
3) le durcissement de la mousse par rayonnement actinique
ou
1) lors d'une première étape, le moussage de la composition aqueuse A), puis
2) le durcissement de la mousse fabriquée à l'étape 1) par rayonnement actinique,
3) le séchage thermique de la mousse,
les étapes 2) et 3) pouvant chacune être répétées un nombre quelconque de fois,
**caractérisé en ce que** la composition aqueuse A) contient les composants
A1) un ou plusieurs liants aqueux durcissables par rayonnement,
A2) un ou plusieurs épaississants,
A3) un ou plusieurs stabilisateurs de mousse,
et
**caractérisé en ce que** le composant A1) contient des (méth)acrylates de polyuréthane (i).

2. Procédé de fabrication de mousses durcies par rayonnement selon la revendication 1, dans lequel le (méth)acrylate de polyuréthane (i) contient
A1.1) un ou plusieurs composés contenant au moins un groupe réactif avec les isocyanates et au moins un groupe insaturé, polymérisable par voie radicalaire,
A1.2) un ou plusieurs composés monomères et/ou polymères différents de A1.1),
A1.3) un ou plusieurs composés contenant au moins un groupe réactif avec les isocyanates et en outre au moins un groupe à effet hydrophilisant, et
A1.4) un ou plusieurs polyisocyanates organiques.

3. Procédé de fabrication de mousses durcies par rayonnement selon la revendication 2, **caractérisé en ce qu'**un composant A1.5) est contenu, qui est différent de A1.1) à A1.3) et comprend au moins une fonction amino.

4. Procédé de fabrication de mousses durcies par rayonnement selon l'une quelconque des revendications 1 à 3, **caractérisé en ce que** le composant A1) contient des (méth)acrylates de polyuréthane (i) et un composant (ii), un diluant réactif contenant au moins un groupe polymérisable par voie radicalaire.

5. Procédé de fabrication de mousses durcies par rayonnement selon l'une quelconque des revendications 1 à 4, **caractérisé en ce que** la teneur en groupes insaturés durcissables par rayonnement du composant A1) est comprise entre 0,3 et 6,0 mol/kg, par rapport à la somme des parties en poids des constituants non aqueux du composant A1).

6. Procédé de fabrication de mousses durcies par rayonnement selon l'une quelconque des revendications 1 à 5, **caractérisé en ce que** le moussage a lieu par introduction d'un gaz et/ou par l'action d'une énergie de cisaillement.

7. Procédé de fabrication de mousses durcies par rayonnement selon l'une quelconque des revendications 1 à 6, **caractérisé en ce que** le matériau moussé présente avant le séchage une densité de mousse de 200 à 1 000 g/l et, après le séchage, une densité de mousse de 50 à 600 g/l.

8. Procédé de fabrication de mousses durcies par rayonnement selon l'une quelconque des revendications 1 à 7, **caractérisé en ce que** le séchage thermique (étape 2 ou 3) a lieu à une température de 25 à 150 °C.

9. Mousses durcies par rayonnement fabriquées par le procédé selon l'une quelconque des revendications 1 à 8, contenant au moins un (méth)acrylate de polyuréthane (i) qui contient
A1.1) un ou plusieurs composés contenant au moins un groupe réactif avec les isocyanates et au moins un groupe insaturé, polymérisable par voie radicalaire,
A1.2) un ou plusieurs composés monomères et/ou polymères différents de A1.1),
A1.3) un ou plusieurs composés contenant au moins un groupe réactif avec les isocyanates et en outre au moins un groupe à effet hydrophilisant, et
A1.4) un ou plusieurs polyisocyanates organiques.

10. Compositions aqueuses moussées durcissables par rayonnement A), contenant les composants
A1) un ou plusieurs liants aqueux durcissables par rayonnement,
A2) un ou plusieurs épaississants,
A3) un ou plusieurs stabilisateurs de mousse, **caractérisées en ce qu'**au moins un (méth)acrylate de polyuréthane (i) contenant
A1.1) un ou plusieurs composés contenant au moins un groupe réactif avec les isocyanates et au moins un groupe insaturé, polymérisable par voie radicalaire,
A1.2) un ou plusieurs composés monomères et/ou polymères différents de A1.1),
A1.3) un ou plusieurs composés contenant au moins un groupe réactif avec les isocyanates et en outre au moins un groupe à effet hydrophilisant, et
A1.4) un ou plusieurs polyisocyanates organiques
est contenu en tant que composant A1).

11. Utilisation des mousses durcies par rayonnement selon la revendication 9 pour le revêtement de substrats.

12. Substrats revêtus avec les mousses durcies par rayonnement selon la revendication 9.
